# EUROPEAN PATENT APPLICATION

(11) **EP 3 943 376 A1**
(43) Date of publication of application: **26.01.2022**
(21) Application number: 20774465.7
(22) Date of filing: 18.03.2020
(51) Int. Cl.: B62M 7/12, B62M 23/02

(54) **SERIAL HYBRID MOTORCYCLE**

(30) Priority: 19.03.2019 JP 2019050895
(71) Applicant: HONDA MOTOR CO., LTD., Minato-ku Tokyo 107-8556 (JP)
(72) Inventor: YAMAGUCHI Takafumi, Wako-shi, Saitama 351-0193 (JP); KINOSHITA Ryosuke, Wako-shi, Saitama 351-0193 (JP); SAITO Hibiki, Wako-shi, Saitama 351-0193 (JP); INO Satoshi, Wako-shi, Saitama 351-0193 (JP); TANAKA Hiroyuki, Wako-shi, Saitama 351-0193 (JP)
(74) Representative: Beder, Jens
(86) International application number: PCT/JP2020/011921
(87) International publication number: WO 2020/189708

(57) **Abstract**

The present invention relates to a serial hybrid motorcycle provided with an efficient layout of component parts comprising an electric power control unit. An electric power control unit (26) that electrically drives an in-wheel motor (M) to rotate a rear wheel (18r), by controlling electric power from a battery (B), is disposed between an electric power generating engine (E) that charges the battery (B) and a pivot plate (34) that axially supports a swing arm (36).

## Description

### Technical Field

The present invention relates to a series (serial) hybrid motorcycle in which a generator is rotated by an engine to charge a battery, and DC power of the battery is converted into drive power of a motor through a power control unit (PCU) to obtain power of the motor, the series hybrid motorcycle traveling by rotating wheels by the power of the motor.

### Background Art

Japanese Laid-Open Patent Publication No. 2011-016414 (hereinafter referred to as JP 2011-016414 A) discloses a so-called parallel hybrid motorcycle in which wheels can be driven through a transmission and a chain type electric motor by using either power from a motor or power from an engine ([0041], [0042] of JP 2011-016414 A).

### Summary of Invention

In the case of a motorcycle having a limited mounting space as compared with a four-wheeled vehicle, the adoption of a parallel hybrid system having a complicated structure results in an increase in size.

Therefore, demand is increasing for a series hybrid motorcycle which is capable of extending a cruising distance while traveling only by power of a motor and has a simple structure as compared with a parallel hybrid motorcycle.

However, there is a limitation in the layout (arrangement) of a battery and a power control unit having a large capacity, which is an obstacle to practical use.

The present invention has been made in view of such a problem, and an object thereof is to provide a series hybrid motorcycle which enables components including a power control unit to be efficiently laid out.

According to an aspect of the present invention, provided is a series hybrid motorcycle (10) comprising: a vehicle body frame (F) including a head pipe (30) that steerably supports a front fork (37) pivotally supporting a front wheel (18f), a backbone frame (32) extending obliquely rearward and downward from the head pipe (30), and a pivot plate (34) extending downward from the backbone frame (32); an electric power generating engine (E) suspended from the backbone frame (32); a battery (B) that stores power generated by the electric power generating engine (E); a power control unit (26) that controls the power of the battery (B); a swing arm (36) having a front end that is pivotally supported by the pivot plate (34), and having a rear end that pivotally supports a rear wheel (18r); and a motor (M) that is driven through the power control unit (26) to drive the rear wheel (18r) to rotate, wherein the power control unit (26) is disposed between the electric power generating engine (E) and the pivot plate (34).

In this case, the motor (M) may be an in-wheel motor (M) disposed inside the rear wheel (18r), the power control unit (26) and the in-wheel motor (M) may be connected via a power cable (24), and the power cable (24) may be wired along the swing arm (36).

Further, the series hybrid motorcycle may further comprise a seat frame (35) extending obliquely upward and rearward from the backbone frame (32) and supporting a riding seat (44), and the battery (B) may be disposed in a space below the riding seat (44).

Further, it is preferable that the battery (B) and the power control unit (26) are connected via another power cable (22), and the battery (B) and the power control unit (26) are disposed so as to partially overlap each other in the front-rear direction, the another power cable (22) being wired between overlapping portions of the battery (B) and the power control unit (26).

Further, the power control unit (26) may be accommodated in a case made of metal, the case may be fixed to the vehicle body frame (F), and a part of the electric power generating engine (E) may be fixed to the case.

Furthermore, a battery liquid path (110B) through which a liquid medium flows may be formed around the battery (B), the battery liquid path (110B) may be connected to a pump (90) that pumps the liquid medium and to a radiator (58) that cools the liquid medium, the pump (90) may be provided between the backbone frame (32) and the electric power generating engine (E), and the radiator (58) may be disposed above an air cleaner box (56) provided on the backbone frame (32).

Furthermore, an exhaust pipe (93) attached to the electric power generating engine (E) may extend toward a rear side of a vehicle body, an exhaust pipe liquid path (110M) through which the liquid medium flows may be formed around the exhaust pipe (93), and the exhaust pipe liquid path (110M) and the battery liquid path (110B) may be connected by a connection liquid path (110C) disposed along the pivot plate (34).

Furthermore, the series hybrid motorcycle may further comprise a fuel tank (42) provided behind the riding seat (44), and a luggage space (40) may be provided behind the fuel tank (42).

According to the present invention, it is possible to reduce the size of the electric power generating engine whose power is not transmitted to the rear wheel driven by the motor, and which is used only for charging the battery. Further, in the series hybrid system, since the rear wheel can be driven directly by the motor, the transmission can be eliminated or the size thereof can be reduced. Therefore, a space is created behind the electric power generating engine by the reduction in size of the conventional engine for motive power generation and by the elimination of the transmission. A power control unit having a relatively large volume can be arranged in this space.

In this case, the power control unit, which is a heavy object, is disposed between the electric power generating engine suspended from the backbone frame and the pivot plate extending downward from the backbone frame, that is, in the lower part of the vehicle body, whereby the center of gravity is lowered and the stability of the vehicle body is improved.

With this arrangement, it is possible to construct a series hybrid motorcycle in which components including the power control unit are efficiently laid out.

Further, according to the present invention, the power control unit is positioned between the electric power generating engine and the pivot plate, and a power cable electrically connecting the power control unit and the in-wheel motor is wired along the swing arm connecting the pivot plate and the in-wheel motor. Therefore, the power cable can be linearly wired, and the power cable can therefore be shortened as much as possible. Since the power cable is heavy because the core wire is thick and the coating is thick, the weight of the series hybrid motorcycle can be reduced by this configuration. Further, since the power cable is wired along the swing arm, bending of the power cable due to vibration of the rear wheel can be suppressed.

Further, according to the present invention, since the power control unit is disposed in the lower part of the vehicle body, a space is formed below the riding seat. A battery having a large power capacity can be mounted by disposing the battery in the space below the riding seat.

Furthermore, according to the present invention, since the another power cable is wired between the overlapping portions of the power control unit and the battery overlapping each other in the front-rear direction, the another power cable can be shortened as much as possible.

Furthermore, according to the present invention, since the metal case accommodating the power control unit is also used as the fixing portion to which the electric power generating engine is fixed, the electric power generating engine can be efficiently fixed, and there is no need to provide a separate fixing portion on the vehicle body frame.

Furthermore, according to the present invention, since the volume of the electric power generating engine is smaller than that of the engine for motive power generation, a space is formed between the backbone frame and the electric power generating engine, and the pump can be disposed in this space. In addition, since the air cleaner box can also be reduced in size as the volume of the electric power generating engine is reduced, the radiator can be disposed by utilizing this space.

Furthermore, according to the present invention, since the battery is positioned above the pivot plate, the connection liquid path can be easily disposed and can be formed short.

Furthermore, according to the present invention, since the fuel tank has a smaller volume than the fuel tank of the engine for motive power generation, the luggage space can be provided.

### Brief Description of Drawings

FIG. 1 is a schematic side view of a series hybrid motorcycle according to an embodiment;
FIG. 2 is a partially cutaway schematic side view focusing on an arrangement position of a power control unit mounted on the series hybrid motorcycle;
FIG. 3 is a block diagram of a temperature control system for a battery; and
FIG. 4 is a schematic explanatory view showing arrangement of liquid paths of the temperature control system for the battery.

### Description of Embodiments

An embodiment of the series hybrid motorcycle according to the present invention will be described in detail below with reference to the accompanying drawings.

### [Configuration]

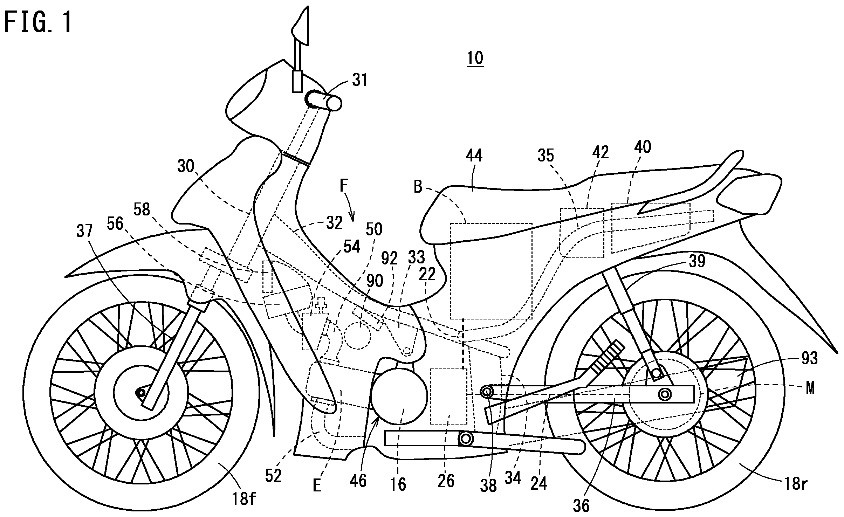

FIG. 1 is a schematic side view of a series hybrid motorcycle (hereinafter also referred to as "two-wheeled vehicle") 10 according to an embodiment.

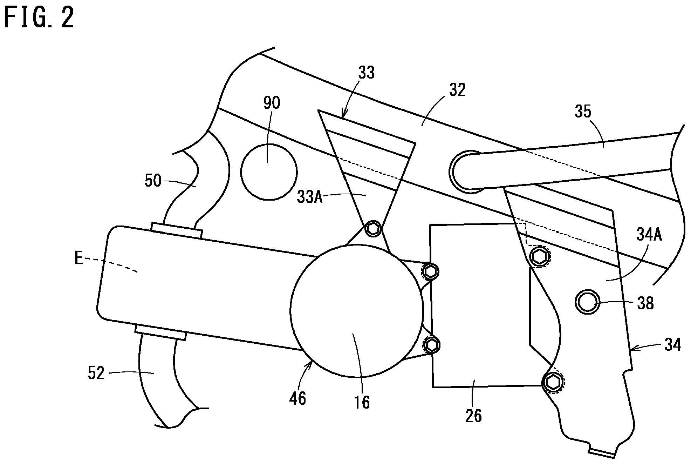

FIG. 2 is a partially cutaway schematic side view focusing on an arrangement position of a power control unit 26 mounted on the two-wheeled vehicle 10.

In the following description, "front and rear", and "left and right" are based on the two-wheeled vehicle 10.

The series hybrid motorcycle 10 basically includes a battery B, an electric power generating engine E and a generator 16 that are used for charging the battery B, a motor M that drives a rear wheel 18r, and a power control unit (PCU) 26 that converts DC power supplied from the battery B via a power cable 22 into motor drive power and drives the motor M via a power cable 24. The power control unit 26 has a structure in which power elements (active elements and passive elements) constituting an inverter and an ECU (electronic control unit) are integrally attached in a metal case having excellent heat dissipation properties. The power control unit 26 has a rectangular parallelepiped appearance.

A vehicle body frame F of the two-wheeled vehicle 10 is constituted by a head pipe 30, a backbone frame 32 made of steel pipe, and seat frames (rear frames) 35 made of steel pipe. The front end of the backbone frame 32 is welded to the head pipe 30 and extends obliquely rearward and downward. The seat frames 35 are welded to the rear end of the backbone frame 32. A front fork 37 having an upper portion connected to a steering handle (bar handle) 31 and a lower portion pivotally supporting a front wheel 18f is steerably and pivotally attached to the head pipe 30.

Left and right center brackets 33 extending downward are welded to a central portion of the backbone frame 32. Left and right pivot plates 34 extending downward are welded to a rear end portion of the backbone frame 32. The left and right pivot plates 34 respectively have left and right plate portions (plate surfaces) 34A that extend from the welded portions while being bent laterally downward with respect to the axial direction of the backbone frame 32 and further extend while being bent vertically downward.

In the plate portions 34A of the pivot plates 34, there is provided a pivot shaft 38 for pivotally supporting the front end of a swing arm (double-sided swing arm) 36 for pivotally supporting the rear wheel 18r at its rear end.

A rear cushion 39 is connected between the swing arm 36 and the seat frames 35. A luggage space 40 and a fuel tank 42 are attached between the left and right seat frames 35 in this order from the rear end side. Since the volume of the fuel tank 42 is smaller than that of the fuel tank of an engine for motive power generation, it is possible to provide the luggage space 40.

A riding seat 44 is installed above the battery B, the fuel tank 42, and the luggage space 40.

The left and right center brackets 33 welded to the central portion of the backbone frame 32 respectively have left and right plate portions (plate surfaces) 33A that extend from the welded portions while being bent laterally downward with respect to the axial direction of the backbone frame 32 and further extend while being bent vertically downward. An engine case 46 for accommodating the electric power generating engine E and the generator 16 is suspended from the plate portions 33A of the center brackets 33.

The upper and lower sides of the rear side of the substantially rectangular parallelepiped PCU 26 are fixed to the left and right plate portions 34A of the pivot plates 34 by bolts. The upper and lower sides of the left and right front side of the PCU 26 are fixed to the engine case 46 on the rear end side of the generator 16 by bolts. Thus, the PCU 26 is fixed between the engine case 46 and the pivot plates 34.

Thus, in the series hybrid motorcycle 10 according to this embodiment, the PCU 26, which controls the power of the battery B to electrically drive the in-wheel motor M that rotates the rear wheel 18r, is disposed between the electric power generating engine E for charging the battery B, and the pivot plates 34 that pivotally support the swing arm 36. Therefore, an efficient layout of the PCU 26 mounted on the series hybrid motorcycle 10 can be realized.

As shown in FIG. 1, one end portion of an intake pipe 50 and one end portion of an exhaust pipe 52 are provided in a cylinder head portion of the electric power generating engine E. The other end portion of the intake pipe 50 is connected, via a carburetor 54, to a clean side, which is a downstream side of an air filter in an air cleaner box 56 in an intake air flow direction. Since the electric power generating engine E has a smaller displacement than the engine for motive power generation, the air filter may be small, and the volume of the air cleaner box 56 can be reduced.

On the other hand, the other end portion of the exhaust pipe 52 is connected to an exhaust pipe (muffler) 93. The exhaust pipe 93 is provided outside the swing arm 36 on the right side of the two-wheeled vehicle 10. The exhaust pipe 93 also functions to heat the battery B as described later. A radiator 58 for cooling the battery B is disposed between the upper portion of the air cleaner box 56 and the lower portion of the front end portion of the backbone frame 32.

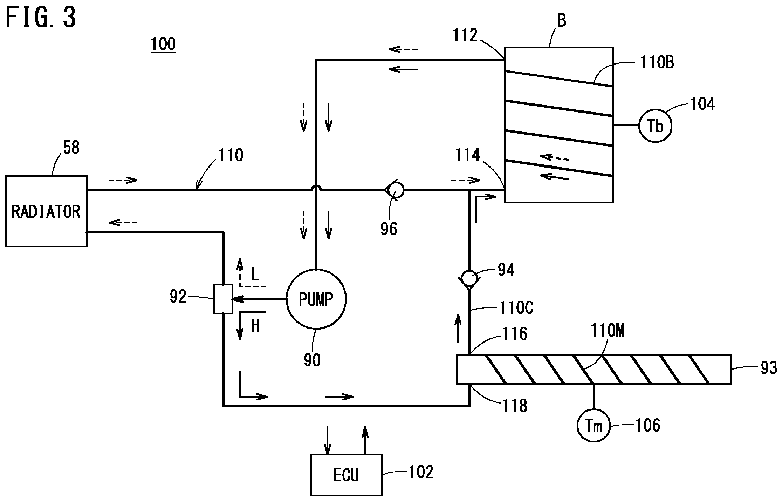

FIG. 3 is a block diagram showing a configuration of a temperature control system 100 for the battery B mounted in the two-wheeled vehicle 10.

The temperature control system 100 is constituted by, in addition to the battery B whose temperature is to be controlled, the radiator 58, the exhaust pipe 93, an electric pump 90, a switching valve 92, check valves 94 and 96, and a liquid path (conduit line) 110 connecting these components. A cooling fluid (liquid medium) such as a coolant is sealed in the liquid path 110. Liquid paths 110B and 110M are helically wrapped around the battery B and the exhaust pipe 93, respectively.

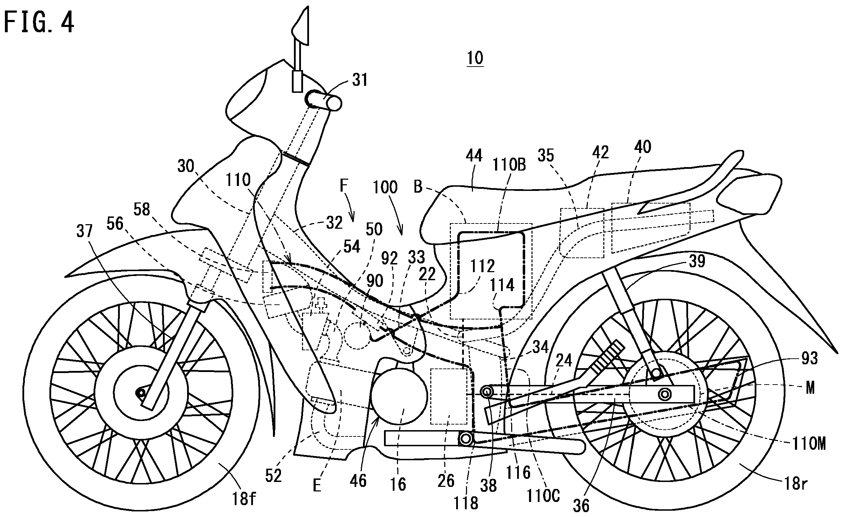

FIG. 4 shows a schematic arrangement position of the liquid path (pipe) 110 in the two-wheeled vehicle 10.

The liquid path 110, which is indicated by a thick solid line in FIG. 3 and by a thick alternate long and short dash line in FIG. 4, extends from an outlet 112 of the helical liquid path 110B of the battery B toward a suction port of the pump 90, and a discharge port of the pump 90 communicates with a suction port of the switching valve 92. The liquid path from the outlet 112 of the helical liquid path 110B of the battery B to the suction port of the switching valve 92 serves as both cooling and heating routes as indicated by a broken-line arrow L (cooling) and a solid-line arrow H (heating) in FIG. 3.

One liquid path 110 of the switching valve 92, which forms a cooling route, communicates with an inlet 114 of the helical liquid path 110B of the battery B via the radiator 58 and the check valve 96.

The other liquid path 110 of the switching valve 92, which forms a heating route, communicates with an inlet 118 of the helical liquid path (exhaust pipe liquid path) 110M of the exhaust pipe 93. An outlet 116 of the helical liquid path 110M communicates with the inlet 114 of the helical liquid path (battery liquid path) 110B of the battery B via a connection liquid path 110C in which the check valve 94 is interposed. At the inlet 114 of the liquid path 110B, the heating route and the cooling route are merged.

The connection liquid path 110C connecting the helical liquid path 110B of the battery B and the helical liquid path 110M of the exhaust pipe 93 to each other is disposed along the up-down direction of the pivot plates 34. As a result, the connection liquid path 110C can be easily disposed and formed short.

The temperature of the battery B is controlled by an ECU (electronic control unit) 102 serving as a control device. To the ECU 102, a battery temperature Tb is input from a temperature sensor 104 attached to the battery B, and an exhaust pipe temperature Tm is input from a temperature sensor 106 attached to the exhaust pipe 93. The ECU 102 controls the pump 90 and the switching valve 92 based on the battery temperature Tb and the exhaust pipe temperature Tm that are thus input.

The operation of the temperature control system 100 will be described.

When the temperature sensor 104 detects that the temperature of the battery B is high, the switching valve 92 switches the flow direction of the liquid medium to the dashed arrow L side, and the pump 90 is driven. As a result, the liquid medium discharged from the pump 90 and cooled by the radiator 58 through the switching valve 92 passes through the check valve 96 and the helical liquid path 110B of the battery B, and is sucked into the pump 90. In this way, the battery B is cooled.

On the other hand, when the temperature sensor 104 detects that the temperature of the battery B is low, the switching valve 92 switches the flow direction of the liquid medium to the solid arrow H side, and the pump 90 is driven. As a result, the liquid medium discharged from the pump 90 and heated by the exhaust pipe 93 through the switching valve 92 passes through the check valve 94 and the helical liquid path 110B of the battery B, and is sucked into the pump 90. In this way, the battery B is heated.

When the cooling route is opened, the switching valve 92 may be controlled so that a small amount of the liquid medium flows toward the heating route. This is performed in order to prevent the liquid medium from boiling in the helical liquid path 110M.

### [Invention Graspable from Embodiment]

The invention that can be grasped from the above-described embodiment will be described below. It should be noted that, for the sake of understanding, the reference numerals used above are given in parentheses to the constituent elements, but the constituent elements are not limited to those denoted by the reference numerals.

The series hybrid motorcycle (10) according to the present invention comprises a vehicle body frame (F) including a head pipe (30) that steerably supports a front fork (37) pivotally supporting a front wheel (18f), a backbone frame (32) extending obliquely rearward and downward from the head pipe (30), and a pivot plate (34) extending downward from the backbone frame (32); an electric power generating engine (E) suspended from the backbone frame (32); a battery (B) that stores power generated by the electric power generating engine (E); a power control unit (26) that controls the power of the battery (B); a swing arm (36) having a front end that is pivotally supported by the pivot plate (34), and having a rear end that pivotally supports a rear wheel (18r); and a motor (M) that is driven through the power control unit (26) to drive the rear wheel (18r) to rotate, wherein the power control unit (26) is disposed between the electric power generating engine (E) and the pivot plate (34).

According to this configuration, it is possible to reduce the size of the electric power generating engine (E), whose power is not transmitted to the rear wheel (18r) driven by the motor (M), and which is used only for charging the battery (B). Further, in the series hybrid system, since the rear wheel (18r) can be driven directly by the motor (M), the transmission can be eliminated or the size thereof can be reduced. Therefore, a space is created behind the electric power generating engine (E). The power control unit (26) having a relatively large volume can be disposed in this space.

In this case, the power control unit (26), which is a heavy object, is disposed between the electric power generating engine (E) suspended from the backbone frame (32) and the pivot plate (34) extending downward from the backbone frame (32), that is, in the lower part of the vehicle body, whereby the center of gravity is lowered and the stability of the vehicle body is improved.

With this arrangement, it is possible to construct the series hybrid motorcycle (10) in which the components including the power control unit (26) are efficiently laid out.

In this case, the motor (M) may be an in-wheel motor (M) disposed inside the rear wheel (18r), the power control unit (26) and the in-wheel motor (M) may be connected via a power cable (24), and the power cable (24) may be wired along the swing arm (36).

Thus, the power control unit (26) is positioned between the electric power generating engine (E) and the pivot plate (34), and the power cable (24) electrically connecting the power control unit (26) and the in-wheel motor (M) is wired along the swing arm (36) connecting the pivot plate (34) and the in-wheel motor (M). Therefore, the power cable (24) can be linearly wired, and the power cable (24) can be shortened as much as possible. Since the power cable (24) is a heavy object having a thick core wire and a thick coating, this configuration can reduce the weight of the series hybrid motorcycle (10). In addition, since the power cable (24) is wired along the swing arm (36), bending of the power cable (24) due to vibration of the rear wheel (18r) can be suppressed.

Further, the series hybrid motorcycle may further comprise a seat frame (35) extending obliquely upward and rearward from the backbone frame (32) and supporting a riding seat (44), and the battery (B) may be disposed in a space below the riding seat (44).

According to this configuration, because the power control unit (26) is disposed in the lower part of the vehicle body, a space is formed below the riding seat (44). The battery (B) having a large power capacity can be mounted by disposing the battery (B) in the space below the riding seat (44).

Further, it is preferable that the battery (B) and the power control unit (26) are connected via another power cable (22), and the battery (B) and the power control unit (26) are disposed so as to partially overlap each other in the front-rear direction, the another power cable (22) being wired between overlapping portions of the battery (B) and the power control unit (26).

According to this configuration, since the another power cable (22) is wired between the overlapping portions of the power control unit (26) and the battery (B) overlapping each other in the front-rear direction, the another power cable (22) can be shortened as much as possible.

Further, the power control unit (26) may be accommodated in a case made of metal, the case may be fixed to the vehicle body frame (F), and a part of the electric power generating engine (E) may be fixed to the case.

According to this configuration, since the metal case accommodating the power control unit (26) is also used as the fixing portion to which the electric power generating engine (E) is fixed, the electric power generating engine (E) can be efficiently fixed, and there is no need to provide a separate fixing portion on the vehicle body frame (F).

Furthermore, a battery liquid path (110B) through which a liquid medium flows may be formed around the battery (B), the battery liquid path (110B) may be connected to a pump (90) that pumps the liquid medium and to a radiator (58) that cools the liquid medium, the pump (90) may be provided between the backbone frame (32) and the electric power generating engine (E), and the radiator (58) may be disposed above an air cleaner box (56) provided on the backbone frame (32).

Since the electric power generating engine (E) has a smaller volume than the engine for motive power generation, a space is formed between the backbone frame (32) and the electric power generating engine (E). The pump (90) can be disposed in this space. In addition, since the air cleaner box (56) can also be reduced in size as the volume of the electric power generating engine (E) is reduced, the radiator (58) can be disposed by utilizing this space.

Furthermore, an exhaust pipe (93) attached to the electric power generating engine (E) may extend toward a rear side of a vehicle body, an exhaust pipe liquid path (110M) through which the liquid medium flows may be formed around the exhaust pipe (93), and the exhaust pipe liquid path (110M) and the battery liquid path (110B) may be connected by a connection liquid path (110C) disposed along the pivot plate (34).

Since the battery (B) is positioned above the pivot plate (34) in this manner, the connection liquid path (110C) can be easily disposed and can be formed short.

Furthermore, the series hybrid motorcycle may further comprise a fuel tank (42) provided behind the riding seat (44), and a luggage space (40) may be provided behind the fuel tank (42).

In this manner, since the volume of the fuel tank (42) is smaller than that of the fuel tank of the engine for motive power generation, it is possible to provide the luggage space (40).

The present invention is not limited to the above-described embodiment, and various configurations can be adopted based on the description of this specification.

## Claims

1. A series hybrid motorcycle (10) comprising:
a vehicle body frame (F) including a head pipe (30) that steerably supports a front fork (37) pivotally supporting a front wheel (18f), a backbone frame (32) extending obliquely rearward and downward from the head pipe (30), and a pivot plate (34) extending downward from the backbone frame (32);
an electric power generating engine (E) suspended from the backbone frame (32);
a battery (B) that stores power generated by the electric power generating engine (E);
a power control unit (26) that controls the power of the battery (B);
a swing arm (36) having a front end that is pivotally supported by the pivot plate (34), and having a rear end that pivotally supports a rear wheel (18r); and
a motor (M) that is driven through the power control unit (26) to drive the rear wheel (18r) to rotate, wherein
the power control unit (26) is disposed between the electric power generating engine (E) and the pivot plate (34).

2. The series hybrid motorcycle (10) according to claim 1, wherein
the motor (M) is an in-wheel motor (M) disposed inside the rear wheel (18r),
the power control unit (26) and the in-wheel motor (M) are connected via a power cable (24), and
the power cable (24) is wired along the swing arm (36).

3. The series hybrid motorcycle (10) according to claim 1 or 2, further comprising a seat frame (35) extending obliquely upward and rearward from the backbone frame (32) and supporting a riding seat (44), wherein
the battery (B) is disposed in a space below the riding seat (44).

4. The series hybrid motorcycle (10) according to claim 3, wherein
the battery (B) and the power control unit (26) are connected via another power cable (22), and
the battery (B) and the power control unit (26) are disposed so as to partially overlap each other in the front-rear direction, the another power cable (22) being wired between overlapping portions of the battery (B) and the power control unit (26).

5. The series hybrid motorcycle (10) according to any one of claims 1 to 4, wherein
the power control unit (26) is accommodated in a case made of metal,
the case is fixed to the vehicle body frame (F), and
a part of the electric power generating engine (E) is fixed to the case.

6. The series hybrid motorcycle (10) according to any one of claims 1 to 5, wherein
a battery liquid path (110B) through which a liquid medium flows is formed around the battery (B),
the battery liquid path (110B) is connected to a pump (90) that pumps the liquid medium and to a radiator (58) that cools the liquid medium,
the pump (90) is provided between the backbone frame (32) and the electric power generating engine (E), and
the radiator (58) is disposed above an air cleaner box (56) provided on the backbone frame (32).

7. The series hybrid motorcycle (10) according to claim 6, wherein
an exhaust pipe (93) attached to the electric power generating engine (E) extends toward a rear side of a vehicle body,
an exhaust pipe liquid path (110M) through which the liquid medium flows is formed around the exhaust pipe (93), and
the exhaust pipe liquid path (110M) and the battery liquid path (110B) are connected by a connection liquid path (110C) disposed along the pivot plate (34).

8. The series hybrid motorcycle (10) according to any one of claims 3 to 7, further comprising a fuel tank (42) provided behind the riding seat (44), wherein
a luggage space (40) is provided behind the fuel tank (42).
